# EUROPÄISCHE PATENTSCHRIFT

(11) **EP 3 832 508 B1**
(45) Veröffentlichungstag und Bekanntmachung des Hinweises auf die Patenterteilung: **24.01.2024**
(21) Anmeldenummer: 19214164.6
(22) Anmeldetag: 06.12.2019
(51) Int. Cl.: G06F 21/57, H04L 9/32, G06F 21/55, H04L 9/40, G06F 21/44

(54) **SPERRUNG ODER WIDERRUF EINES GERÄTEZERTIFIKATS**
BLOCKING OR REVOKING A DEVICE CERTIFICATE
BLOCAGE OU ANNULATION D'UN CERTIFICAT D'APPAREIL

(43) Veröffentlichungstag der Anmeldung: 09.06.2021
(73) Patentinhaber: Siemens Aktiengesellschaft, 80333 München (DE)
(72) Erfinder: Aschauer, Hans, 81829 München (DE); Falk, Rainer, 85586 Poing (DE); Furch, Andreas, 85354 Freising (DE); Heintel, Markus, 81377 München (DE); Zwanzger, Johannes, 85579 Neubiberg (DE)
(74) Vertreter: Siemens Patent Attorneys

(56) Entgegenhaltungen:
- DE-A1-102013 205 051
- US-A1- 2006 156 391
- US-A1- 2015 150 110

## Beschreibung

Die Erfindung betrifft ein computerimplementiertes Verfahren, eine Vorrichtung und ein System zum Sperren oder Widerrufen eines Zertifikats eines Geräts. Des Weiteren ist die Erfindung auf ein Computerprogrammprodukt gerichtet.

Mit einem digitalen Zertifikat kann die Authentizität und/oder Integrität eines Nutzers oder eines Geräts bestätigt oder durch ein kryptographisches Verfahren geprüft werden. Ein digitales Zertifikat wird in der Regel von einer Zertifizierungsstelle (engl. Certification Authority, kurz: CA) ausgestellt. Die Zertifizierungsstelle kann ein Zertifikat widerrufen oder sperren. Dazu wird die Information zu widerrufenen oder gesperrten Zertifikaten in Form einer Zertifikatswiderrufsliste und einer OCSP-Antwort (engl. OCSP Response; Online Certificate Status Protocol) bereitgestellt. Das Sperren oder Widerrufen eines Zertifikats erfolgt dabei durch eine manuelle Interaktion mit der Zertifizierungsstelle. Dies ist aber insbesondere für Geräte, wie z.B. Internet-of-Things-Geräte (IoT-Geräte), die nicht regelmäßig administriert werden, nicht praktikabel.

Aus DE 10 2013 205051 A1 ist ein Verfahren zum Aktualisieren eines digitalen Geräte-Zertifikats eines Automatisierungsgeräts einer Automatisierungsanlage bekannt.

US 2015/150110 A1 offenbart ein Verfahren zum Identifizieren und Löschen von unzulässigen Zugriffs-Tokens eines Geräts in Abhängigkeit eines Geräte-Fingerabdrucks des Geräts.

US 2006/156391 A1 beschreibt ein Verfahren zum regelbasierten Widerrufen von Netzwerk-Berechtigungsnachweisen.

Es ist eine Aufgabe der Erfindung, das Sperren oder Widerrufen eines Gerätezertifikats zu vereinfachen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung ein computerimplementiertes Verfahren zum Sperren oder Widerrufen eines Zertifikats eines Geräts, wobei das Zertifikat dazu geeignet ist, das Gerät zu authentisieren, und wobei das Zertifikat für das Gerät generiert wurde, mit den Verfahrensschritten:
- Erfassen von gerätespezifischen Daten für das Gerät,
- Ermitteln eines Risikowerts abhängig von den gerätespezifischen Daten,
- Prüfen des Risikowerts anhand eines Referenzwerts,
- Generieren einer Ungültigkeitsinformation für das Zertifikat, wenn der Risikowert vom Referenzwert signifikant abweicht, und
- Ausgeben der Ungültigkeitsinformation zum Sperren oder Widerrufen des Zertifikats.

Es ist ein Vorteil der vorliegenden Erfindung, dass digitale Zertifikate nicht explizit, insbesondere nicht manuell, widerrufen oder gesperrt werden. Ein Widerruf oder eine Sperrung eines Gerätezertifikats kann automatisch in Abhängigkeit einer Prüfung anhand von gerätespezifischen Daten, d.h. in Abhängigkeit der generierten Ungültigkeitsinformation, erfolgen. Die Sperrung oder der Widerruf kann insbesondere durch eine Zertifizierungsstelle erfolgen. Dazu kann die Ungültigkeitsinformation an die Zertifizierungsstelle ausgegeben werden. Insbesondere kann ein Zertifikat widerrufen oder gesperrt werden, sobald der Risikowert vom Referenzwert abweicht oder einen Schwellwert überschreitet.

Das Verfahren kann insbesondere für IoT-Geräte angewandt werden, für die eine herkömmliche Zertifikatsverwaltung zu aufwendig oder nicht praktikabel ist. Das Verfahren ist außerdem für Gerätezertifikate, die eine lange oder unbestimmte Gültigkeitsdauer aufweisen, vorteilhaft.

Erfindungsgemäß umfassen die gerätespezifischen Daten mindestens eine der folgenden Informationen:
- eine auf dem Gerät installierte Firmware-Version,
- eine Zeitinformation einer auf dem Gerät installierten Software,
- eine überwachte Kommunikation des Geräts,
- eine überwachte Kommunikation baugleicher Geräte,
- eine überwachte Kommunikation von Geräten in einer definierten räumlichen Umgebung des Geräts,
- eine Information über die Nutzungsdauer und/oder die Zahl der Anwendungsfälle des vom Gerät genutzten Zertifikats,
- eine Aktivitätsinformation des Geräts,
- eine weitere Ungültigkeitsinformation zu einem Zertifikat eines baugleichen Geräts
   und/oder
- eine weitere Ungültigkeitsinformation zu einem Zertifikat eines weiteren Geräts in einer definierten räumlichen Umgebung des Geräts.

In einer Ausführungsform kann das Zertifikat den gerätespezifischen Daten zugeordnet sein.

Es können insbesondere bestimmte gerätespezifische Daten, z.B. Applikationsdaten, Diagnosedaten, Logdaten oder Telemetriedaten, analysiert werden, denen das zu widerrufende Zertifikat zugeordnet ist.

In einer Ausführungsform kann das Zertifikat in Abhängigkeit der Ungültigkeitsinformation als gesperrt oder als widerrufen gekennzeichnet werden.

In einer Ausführungsform kann das Gerätezertifikat in eine Zertifikatssperrliste aufgenommen werden.

Das widerrufene oder gesperrte Zertifikat kann nicht missbräuchlich genutzt werden. Folglich kann sich ein Gerät nicht mittels eines gesperrten oder widerrufenen Zertifikats authentisieren.

In einer Ausführungsform kann das Gerät mindestens ein Ersatzzertifikat umfassen.

Es ist vorteilhaft, wenn ein Gerät eine Vielzahl von Ersatzzertifikaten bzw. weiteren Zertifikaten aufweist. Dies ermöglicht eine Authentisierung des Geräts mittels eines Ersatzzertifikats.

In einer Ausführungsform kann das als gesperrt oder widerrufen gekennzeichnete Zertifikat zur Anforderung eines Ersatzzertifikats genutzt werden.

Ein Gerät kann weitere Ersatzzertifikate bei einer Zertifizierungsstelle anfordern. Dazu kann insbesondere das als gesperrt oder widerrufen gekennzeichnete Zertifikat zugelassen sein, d.h. das Zertifikat ist für eine allgemeine Nutzung gesperrt, kann aber für eine Anforderungsnachricht zum Ausstellen eines Ersatzzertifikats verwendet werden.

In einer Ausführungsform kann das Gerät eine Vielzahl von Ersatzzertifikaten umfassen und bei Sperrung oder Widerruf des Zertifikats oder eines dieser Ersatzzertifikate kann ein anderes dieser Ersatzzertifikate zur Authentisierung des Geräts genutzt werden.

Somit ist es unkritisch, wenn ein einzelnes Gerätezertifikat gesperrt oder widerrufen wird, da eine Authentisierung mittels eines der anderen Zertifikate erfolgen kann.

In einer Ausführungsform kann, wenn das Zertifikat als gesperrt oder widerrufen gekennzeichnet wird, zusätzlich mindestens ein weiteres der Ersatzzertifikate als gesperrt oder widerrufen gekennzeichnet werden.

Gemäß einem zweiten Aspekt betrifft die Erfindung eine Vorrichtung zum Sperren oder Widerrufen eines Zertifikats eines Geräts, wobei das Zertifikat dazu geeignet ist, das Gerät zu authentisieren, und wobei das Zertifikat für das Gerät generiert wurde, umfassend:
- eine Eingabeeinheit, die dazu eingerichtet ist, gerätespezifische Daten für das Gerät zu erfassen,
- eine Analyseeinheit, die derart eingerichtet ist, einen Risikowert abhängig von den gerätespezifischen Daten zu ermitteln,
- ein Prüfeinheit, die derart eingerichtet ist, den Risikowert anhand eines Referenzwerts zu prüfen,
- einen Generator, der derart eingerichtet ist, eine Ungültigkeitsinformation für das Zertifikat, wenn der Risikowert vom Referenzwert signifikant abweicht, zu generieren und
- eine Ausgabeeinheit, die derart eingerichtet ist, die Ungültigkeitsinformation zum Sperren oder Widerrufen des Zertifikats auszugeben, wobei die gerätespezifischen Daten mindestens eine der folgenden Informationen umfassen:
- eine auf dem Gerät installierte Firmware-Version,
- eine Zeitinformation einer auf dem Gerät installierten Software,
- eine überwachte Kommunikation des Geräts,
- eine überwachte Kommunikation baugleicher Geräte,
- eine überwachte Kommunikation von Geräten in einer definierten räumlichen Umgebung des Geräts,
- eine Aktivitätsinformation des Geräts,
- eine Information über die Nutzungsdauer und/oder die Zahl der Anwendungsfälle des vom Gerät genutzten Zertifikats,
- eine weitere Ungültigkeitsinformation zu einem Zertifikat eines baugleichen Geräts und/oder
- eine weitere Ungültigkeitsinformation zu einem Zertifikat eines weiteren Geräts in einer definierten räumlichen Umgebung des Geräts.

In einer Ausführungsform kann die Vorrichtung derart eingerichtet sein, zusätzlich zu prüfen, ob das Gerät mindestens ein Ersatzzertifikat umfasst.

Gemäß einem dritten Aspekt betrifft die Erfindung ein System zum Sperren oder Widerrufen eines Zertifikats eines Geräts umfassend eine erfindungsgemäße Vorrichtung und eine Zertifizierungsstelle, wobei die Zertifizierungsstelle derart eingerichtet ist, ein Zertifikat für ein Gerät auszustellen, zu sperren und/oder zu widerrufen.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, einem nichtflüchtigen/dauerhaften Speichermedium (engl. Non-transitory storage Medium) oder auch in Form einer herunterladbaren Datei von einem Server in einem Netzwerk bereitgestellt oder geliefert werden.

Ausführungsbeispiele des erfindungsgemäßen Verfahrens, der erfindungsgemäßen Vorrichtung und des erfindungsgemäßen Systems sind in den Zeichnungen beispielhaft dargestellt und werden anhand der nachfolgenden Beschreibung näher erläutert. Es zeigen:
- Fig. 1:: ein Ausführungsbeispiel eines erfindungsgemäßen Verfahrens als Ablaufdiagramm;
- Fig. 2:: ein Ausführungsbeispiel einer erfindungsgemäßen Vorrichtung in schematischer Blockdarstellung; und
- Fig. 3:: ein Ausführungsbeispiel eines erfindungsgemäßen Systems in schematischer Blockdarstellung.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

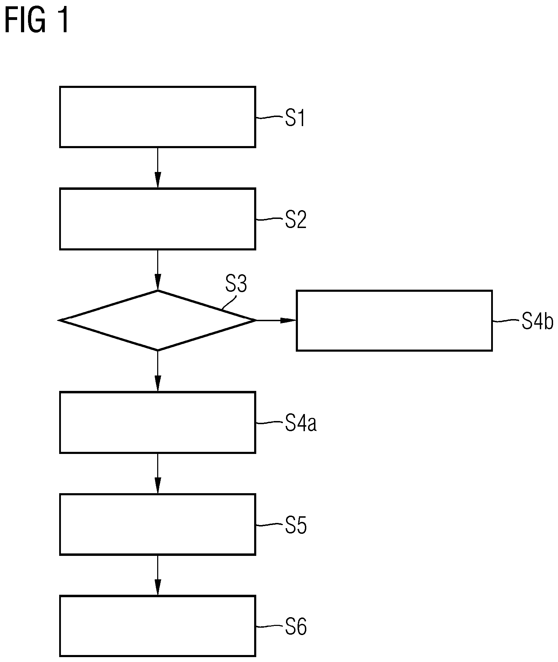

Figur 1 zeigt ein Ausführungsbeispiel des erfindungsgemäßen Verfahrens zum Sperren oder Widerrufen eines Zertifikats eines Geräts als Ablaufdiagramm. Das Zertifikat, insbesondere ein digitales Zertifikat, ist dazu geeignet das Gerät zu authentisieren. Das Gerät kann beispielsweise ein Internet-of-Things-Gerät für eine Smart-Home-Anwendung, für eine Gebäudeautomatisierung oder für ein intelligentes Stromnetz (engl. Smart Grid) sein. Es kann sich auch um ein IoT-Gerät oder Steuergerät für eine Fabrikautomatisierung, eine Prozessautomatisierung, eine Bahnautomatisierung, eine Verkehrsautomatisierung, ein autonomes Fahrzeug, z.B. ein führerloses Transportsystem, um eine Werkzeugmaschine oder um einen Roboter handeln.

Im ersten Schritt S1 des computerimplementierten Verfahrens werden gerätespezifische Daten des Geräts erfasst. Die gerätespezifischen Daten umfassen mindestens eine der folgenden Informationen:
- eine auf dem Gerät installierte Firmware-Version,
- eine Zeitinformation einer auf dem Gerät installierten Software, wie z.B. der Zeitpunkt des Einspielens von Patchen oder Firmware-Updates,
- eine überwachte Kommunikation des Geräts, wie z.B. Informationen über Kommunikationspartner, verwendete IP-Adressen, Protokolle und/oder Portnummern,
- eine überwachte Kommunikation baugleicher Geräte,
- eine überwachte Kommunikation von Geräten in einer definierten räumlichen Umgebung des Geräts, wie z.B. Teil eines geschlossenen Netzwerks,
- eine Aktivitätsinformation des Geräts, wie z.B. eine aktive Meldung nach einer Integritätsprüfung oder eine fehlende Aktivitätsmeldung, die das Gerät an einen zugeordneten Backend-Dienst übermittelt hat,
- eine Information über die Nutzungsdauer und/oder die Zahl der Anwendungsfälle eines vom Gerät genutzten Zertifikates,
- eine Ungültigkeitsinformation zu einem Zertifikat eines baugleichen Geräts, d.h. wenn ein Zertifikat eines baugleichen Geräts widerrufen oder gesperrt wurde,
   und/oder
- eine weitere Ungültigkeitsinformation zu einem Zertifikat eines weiteren Geräts in einer definierten räumlichen Umgebung des Geräts.

Die gerätespezifischen Daten werden beispielsweise mittels eines Überwachungsdiensts überwacht und zur weiteren Analyse ausgegeben.

Im nächsten Schritt S2 wird ein Risikowert auf Basis der gerätespezifischen Daten ermittelt. Beispielsweise wird durch einen IoT-Backend-Dienst oder einen IoT-Edge-Dienst das Risiko des Geräts anhand der gerätespezifischen Daten überwacht und als Risikowert ausgegeben. Beispielsweise wird anhand der gerätespezifischen Daten eine Firmwareversion des Geräts ermittelt und in Abhängigkeit der Aktualität der Firmwareversion ein Risikowert ermittelt. Alternativ kann eine das Gerät betreffende Kommunikation überwacht werden. Weist die Kommunikation beispielsweise Auffälligkeiten auf, kann entsprechend ein Risikowert ermittelt und ausgegeben werden. Der Risikowert umfasst somit vorzugsweise Informationen über das Gerät, welche auf potentielle Schwachstellen, wie z.B. veraltete Soft- oder Firmware, hinweisen.

Im nächsten Schritt S3 wird der Risikowert anhand eines Referenzwerts geprüft. Beispielsweise wird geprüft, ob der Risikowert einen Schwellwert überschreitet oder noch innerhalb eines vorgegebenen Toleranzbereichs liegt. Dabei kann insbesondere geprüft werden, ob der Risikowert einmalig, mehrmalig innerhalb eines vorgegebenen Zeitfensters oder dauerhaft vom Referenzwert abweicht. Wenn der Risikowert signifikant vom Referenzwert abweicht oder einen Schwellwert über- oder unterschreitet, wird die Ungültigkeitsinformation für das aktuell vom Gerät genutzte Zertifikat generiert, Schritt S4a. Andernfalls wird eine Gültigkeitsinformation generiert, wenn der Risikowert innerhalb des Toleranzbereiches des Referenzwerts liegt, Schritt S4b, d.h. wenn der Risikowert nicht signifikant vom Referenzwert abweicht oder unterhalb bzw. oberhalb eines vorgegebenen Schwellwerts liegt.

Im nächsten Schritt S5 wird, wenn der Risikowert vom Referenzwert abweicht, die Ungültigkeitsinformation zum Sperren oder Widerrufen des Zertifikats an eine Zertifizierungsstelle ausgegeben. In einer Variante kann das Zertifikat eine Adressierungsinformation (URL) der Zertifizierungsstelle enthalten, an die eine Ungültigkeitsinformation übermittelt werden kann. Somit kann das vom Gerät aktuell verwendete oder dem Gerät zugeordnete Zertifikat in Abhängigkeit der Ungültigkeitsinformation widerrufen oder gesperrt werden, Schritt S6.

Es kann außerdem zusätzlich geprüft werden, ob das Gerät mindestens ein weiteres gültiges Ersatzzertifikat aufweist. Solch ein Ersatzzertifikat kann insbesondere zur Authentisierung genutzt werden, wenn das bisher verwendete Zertifikat aufgrund einer Auffälligkeit der gerätespezifischen Daten gesperrt oder widerrufen wurde. Sind nicht ausreichend viele gültige Ersatzzertifikate auf dem Gerät gespeichert, kann das Gerät mindestens ein weiteres Ersatzzertifikat bei einer Zertifizierungsstelle anfordern. Für die Anforderung neuer Ersatzzertifikate kann ein spezieller Geräteschlüssel verwendet werden, der für die Anforderung von Zertifikaten vorgesehen ist. Außerdem können die nicht widerrufenen Ersatzzertifikate und die dadurch bestätigten Geräteschlüssel zur Anforderung verwendet werden. Es ist auch möglich, ein widerrufenes Zertifikat zum Anfordern eines Ersatzzertifikats zuzulassen, d.h. das Zertifikat ist für die allgemeine Nutzung gesperrt, kann aber trotzdem noch verwendet werden, um die Anforderungsnachricht zum Ausstellen eines Ersatzzertifikats zu schützen.

Die Ersatzzertifikate können mit unterschiedlichen kryptographischen Verfahren geschützt sein und/oder einen öffentlichen Schlüssel gemäß unterschiedlicher kryptographischer Verfahren umfassen. Dies ermöglicht beispielsweise, dass ein Gerät über eine Mehrzahl oder Vielzahl von Zertifikaten für unterschiedliche kryptographische Verfahren verfügt. Diese können risikobasiert widerrufen werden, wenn beispielsweise manche der kryptographischen Verfahren schwach oder gebrochen sein könnten. So kann eine einfache Migration auf alternative kryptographische Verfahren, z.B. auf ein Post-Quantum-Kryptoverfahren, erfolgen.

Außerdem kann individuell für ein Gerät auf Schwächen in der Implementierung reagiert werden: Wird ein Angriff, z.B. ein sogenannter Seitenkanalangriff, auf die Implementierung eines kryptografischen Algorithmus in bestimmten Firmware-Versionsständen bekannt, durch den geheimes Schlüsselmaterial zu den Zertifikaten kompromittiert werden könnte, können automatisiert nur die Zertifikate solcher Geräte revoziert werden, die mit den betroffenen Versionsständen arbeiten bzw. ggf. gearbeitet haben.

Es können auch mehrere Ersatzzertifikate für dasselbe kryptographische Verfahren hinterlegt sein. Dies ist beispielsweise vorteilhaft in Fällen, in denen ein Angriff auf einen kryptografischen Algorithmus bzw. dessen Implementierung eine Mindestanzahl von Anwendungsfällen des Zertifikats voraussetzt. Durch regelmäßigen automatischen Widerruf solcher Zertifikate, z.B. nach einer bestimmten Zeitperiode oder Zahl von Anwendungsfällen, und Austauschen durch Ersatzzertifikate kann solchen Angriffen vorgebeugt werden.

Weiterhin ist es möglich, dass ein Zertifikat erst dann als aktiv auf dem Gerät gekennzeichnet wird und damit vom Gerät für eine Authentisierung verwendet wird, wenn ein anderes Zertifikat des Geräts widerrufen wurde.

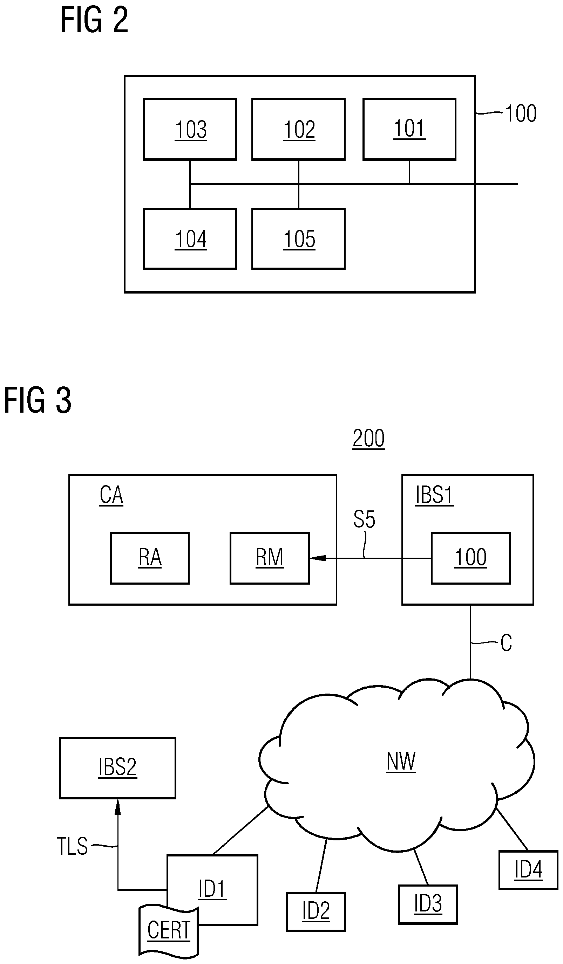

Figur 2 zeigt ein Ausführungsbeispiel einer erfindungsgemäßen Vorrichtung zum Sperren oder Widerrufen eines Zertifikats eines Geräts in schematischer Blockdarstellung. Die Vorrichtung 100 kann beispielsweise als Überwachungsdienst als Teil eines IoT-Backend Dienstes und/oder auf dem Gerät selbst installiert sein.

Die Vorrichtung 100 umfasst eine Eingabeeinheit 101, eine Analyseeinheit 102, eine Prüfeinheit 103, einen Generator 104 und eine Ausgabeeinheit 105. Die Vorrichtung 100 kann weiter mindestens einen Prozessor umfassen. Die Einheiten sind vorzugsweise miteinander gekoppelt.

Die Eingabeeinheit 101 ist dazu eingerichtet, gerätespezifische Daten des Geräts zu erfassen. In Abhängigkeit der gerätespezifischen Daten ermittelt die Analyseeinheit 102 einen Risikowert. Der Risikowert wird an die Prüfeinheit 103 übermittelt, die derart eingerichtet ist, den Risikowert anhand eines eingelesenen Referenzwerts zu prüfen. Die Prüfeinheit 103 gibt ein Prüfergebnis an den Generator 104 aus. Der Generator 104 generiert in Abhängigkeit des Prüfergebnisses eine Ungültigkeitsinformation oder eine Gültigkeitsinformation für das aktuell vom Gerät verwendete Zertifikat. Wenn der Risikowert vom Referenzwert abweicht, generiert der Generator 104 die Ungültigkeitsinformation, welche von der Ausgabeeinheit 105 zum Sperren oder Widerrufen des Zertifikats ausgegeben wird. Die Vorrichtung 100 ist beispielsweise mit einer Zertifizierungsstelle gekoppelt. So kann die Ungültigkeitsinformation an die Zertifizierungsstelle ausgegeben werden, so dass das Zertifikat von der Zertifizierungsstelle in Abhängigkeit der Ungültigkeitsinformation gesperrt oder widerrufen werden kann.

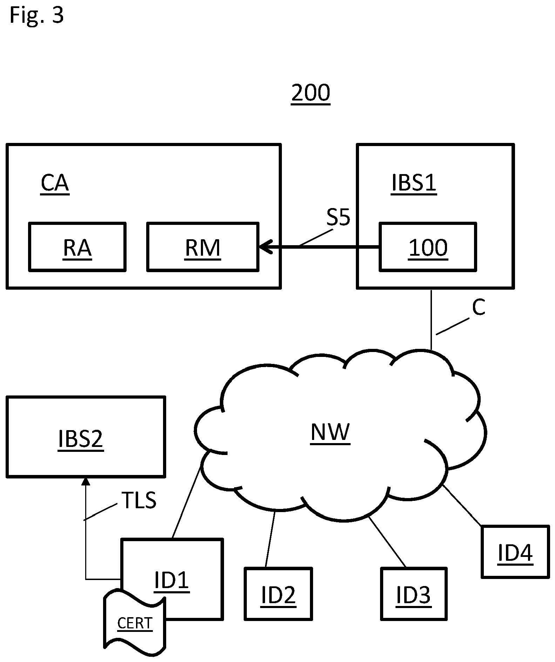

Figur 3 zeigt ein Ausführungsbeispiel eines erfindungsgemäßen Systems zum Sperren oder Widerrufen eines Zertifikats eines Geräts in schematischer Blockdarstellung. Das System 200 umfasst eine Vorrichtung 100 zum Sperren oder Widerrufen eines Zertifikats eines Geräts und eine Zertifizierungsstelle CA (engl. Certification Authority). Die Vorrichtung 100 ist beispielsweise als Komponente eines IoT-Backend-Diensts IBS1 realisiert.

Es sind mehrere IoT-Geräte ID1, ..., ID4 gezeigt, die über ein Netzwerk NW, z.B. das Internet, mit dem IoT-Backend-Dienst IBS1 verbunden sind. Die IoT-Geräte ID1, ..., ID4 können sich jeweils mittels digitaler Zertifikate authentisieren. Die IoT-Geräte ID1, ..., ID4 können die Zertifikate von einer Zertifizierungsstelle CA anfordern, indem sie eine Zertifikatsanforderungsnachricht (engl. Certificate Signing Request) an die Registrierungskomponente RA (engl. Registration Authority) der Zertifizierungsstelle CA stellen. Nach Prüfung durch die Registrierungskomponente RA generiert die Zertifizierungsstelle CA ein Gerätezertifikat, das dann dem jeweiligen IoT-Gerät bereitgestellt wird. Mit einem Zertifikat kann sich ein IoT-Gerät gegenüber dem IoT-Backend-Service IBS1 und/oder weiteren Diensten IBS2 registrieren (engl. Onboarding), d.h. der IoT-Backend-Dienst legt einen Geräte-Account an bzw. aktiviert einen hinterlegten Geräte-Account.

Im gezeigten Beispiel wird das IoT-Gerät ID1 mittels des Zertifikats CERT gegenüber dem Dienst IBS2 authentifiziert, beispielsweise um eine TLS-Verbindung aufzubauen. Die Gültigkeit des Zertifikats wird anhand einer Zertifikatssperrliste geprüft, die von der Zertifizierungsstelle CA ausgestellt wird.

Der Dienst IBS2 kann von der Zertifizierungsstelle CA eine jeweilige Zertifikatssperrliste anfordern.

Die Vorrichtung 100 des IoT-Backend-Diensts IBS1 kann das Risiko von IoT-Geräten in Abhängigkeit von Firmware-Versionen, Konfiguration oder Kommunikationsmustern überwachen und einen Risikowert ausgeben. Alternativ oder zusätzlich kann ein IoT-Gerät auch selbst einen Risikowert ermitteln. Übersteigt der ermittelte Risikowert einen Schwellwert, so wird das dem Gerät zugeordnete bzw. das vom Gerät aktuell verwendete Gerätezertifikat automatisch widerrufen. Dazu sendet der Backend-Service IBS1 eine entsprechende Zertifikatswiderrufsanfrage an die Zertifizierungsstelle CA.

Das Zertifikat CERT des IoT-Geräts ID1 kann beispielsweise automatisch gesperrt oder widerrufen werden, wenn eine installierte Firmware-Version nicht aktuell ist oder eine Kommunikation des Geräts eine Auffälligkeit aufweist. Dazu werden gerätespezifische Daten des IoT-Geräts ID1 von der Vorrichtung 100 erfasst und daraus ein Risikowert ermittelt. Weicht der Risikowert signifikant von einem vorgegebenen Referenzwert ab, wie z.B. eine vorgegebene Firmwareversion, wird eine Ungültigkeitsinformation für das aktuell vom Gerät verwendete Zertifikat generiert und an die Zertifizierungsstelle CA übermittelt S5. Die Zertifizierungsstelle umfasst insbesondere einen Revocation Manager RA, welcher das Zertifikat in Abhängigkeit der Ungültigkeitsinformation als gesperrt oder widerrufen kennzeichnet, wie z.B. in einer Zertifikatssperrliste speichert.

Der Dienst IBS2 kann die Zertifikatssperrliste anfordern und anhand der Zertifikatssperrliste prüfen, ob das Zertifikat CERT des IoT-Geräts ID1 als gesperrt oder widerrufen gekennzeichnet ist. Ist dies der Fall, wird die TLS-Verbindung nicht zugelassen oder unterbrochen.

Die IoT-Geräte ID1, ..., ID4 können außerdem den Widerrufsstatus ihres eigenen Zertifikats bzw. ihrer eigenen Zertifikate überwachen. Dazu kann beispielsweise eine Zertifikatssperrliste von der Zertifizierungsstelle geladen und geprüft werden oder es kann eine OCSP-Zertifikatsstatusanfrage an die Zertifizierungsstelle CA gestellt werden. Wenn ein bislang verwendetes Zertifikat widerrufen ist, kann ein IoT-Gerät ID1, ..., ID4 automatisch auf ein nicht widerrufenes bzw. nicht gesperrtes Ersatzzertifikat wechseln und dieses zur Authentisierung nutzen. Ist damit der Verbindungsaufbau zum Backend-Dienst erfolgreich, ist der Zertifikatswechsel damit abgeschlossen. Wird das Gerät dagegen abgewiesen, führt das Gerät automatisch ein Onboarding durch, um sich erneut, z.B. mit dem Ersatzzertifikat, beim Backend-Dienst IBS1 zu registrieren.

Ein IoT-Gerät kann außerdem regelmäßig prüfen, über wie viele Ersatzzertifikate es verfügt. Wird eine vorgegebene Anzahl unterschritten, kann das Gerät mindestens ein Ersatzzertifikat bei der Zertifizierungsstelle CA anfordern. Dadurch ist gewährleistet, dass das jeweilige IoT-Gerät über hinreichend viele Ersatzzertifikate verfügt, sodass ein verlässlicher Betrieb des Geräts auch bei einem automatischen Widerruf einzelner Gerätezertifikate auf Basis der gerätespezifischen Daten gewährleistet ist. Für die Anforderung kann beispielsweise das als gesperrt oder widerrufen gekennzeichnete Zertifikat genutzt werden. Alternativ kann für die Anforderung neuer Zertifikate ein spezieller Geräteschlüssel, der für die Anforderung von Zertifikaten vorgesehen ist, oder eines der nicht widerrufenen Ersatzzertifikate und der dadurch bestätigte Geräteschlüssel verwendet werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Computerimplementiertes Verfahren zum Sperren oder Widerrufen eines Zertifikats eines Geräts, wobei das Zertifikat dazu geeignet ist, das Gerät zu authentisieren, und wobei das Zertifikat für das Gerät generiert wurde, mit dem Verfahrensschritt:
- Erfassen (S1) von gerätespezifischen Daten für das Gerät,
und **gekennzeichnet durch** die Verfahrensschritte:
- Ermitteln (S2) eines Risikowerts abhängig von den gerätespezifischen Daten,
- Prüfen (S3) des Risikowerts anhand eines Referenzwerts,
- Generieren (S4a) einer Ungültigkeitsinformation für das Zertifikat, wenn der Risikowert vom Referenzwert signifikant abweicht, und
- Ausgeben (S5) der Ungültigkeitsinformation zum Sperren oder Widerrufen des Zertifikats, wobei die gerätespezifischen Daten mindestens eine der folgenden Informationen umfassen:
- eine auf dem Gerät installierte Firmware-Version,
- eine Zeitinformation einer auf dem Gerät installierten Software,
- eine überwachte Kommunikation des Geräts,
- eine überwachte Kommunikation baugleicher Geräte,
- eine überwachte Kommunikation von Geräten in einer definierten räumlichen Umgebung des Geräts,
- eine Aktivitätsinformation des Geräts,
- eine Information über die Nutzungsdauer und/oder die Zahl der Anwendungsfälle des vom Gerät genutzten Zertifikats,
- eine weitere Ungültigkeitsinformation zu einem Zertifikat eines baugleichen Geräts
und/oder
- eine weitere Ungültigkeitsinformation zu einem Zertifikat eines weiteren Geräts in einer definierten räumlichen Umgebung des Geräts.

2. Computerimplementiertes Verfahren nach Anspruch 1, wobei das Zertifikat den gerätespezifischen Daten zugeordnet ist.

3. Computerimplementiertes Verfahren nach einem der vorhergehenden Ansprüche, wobei das Zertifikat in Abhängigkeit der Ungültigkeitsinformation als gesperrt oder als widerrufen gekennzeichnet wird.

4. Computerimplementiertes Verfahren nach einem der vorhergehenden Ansprüche, wobei das Gerätezertifikat in eine Zertifikatssperrliste aufgenommen wird.

5. Computerimplementiertes Verfahren nach einem der vorhergehenden Ansprüche, wobei zusätzlich geprüft wird, ob das Gerät mindestens ein Ersatzzertifikat umfasst.

6. Computerimplementiertes Verfahren nach einem der vorhergehenden Ansprüche, wobei das als gesperrt oder widerrufen gekennzeichnete Zertifikat zur Anforderung eines Ersatzzertifikats genutzt wird.

7. Computerimplementiertes Verfahren nach einem der vorhergehenden Ansprüche, wobei das Gerät eine Vielzahl von Ersatzzertifikaten umfasst und bei Sperrung oder Widerruf des Zertifikats oder eines dieser Ersatzzertifikate ein anderes dieser Ersatzzertifikate zur Authentisierung des Geräts genutzt wird.

8. Computerimplementiertes Verfahren nach einem der vorhergehenden Ansprüche, wobei, wenn das Zertifikat als gesperrt oder widerrufen gekennzeichnet wird, zusätzlich mindestens ein weiteres der Ersatzzertifikate als gesperrt oder widerrufen gekennzeichnet wird.

9. Vorrichtung (100) zum Sperren oder Widerrufen eines Zertifikats eines Geräts, wobei das Zertifikat dazu geeignet ist, das Gerät zu authentisieren, und wobei das Zertifikat für das Gerät generiert wurde, umfassend:
- eine Eingabeeinheit (101), die dazu eingerichtet ist, gerätespezifische Daten für das Gerät zu erfassen,
und **gekennzeichnet durch**
- eine Analyseeinheit (102), die derart eingerichtet ist, einen Risikowert abhängig von den gerätespezifischen Daten zu ermitteln,
- ein Prüfeinheit (103), die derart eingerichtet ist, den Risikowert anhand eines Referenzwerts zu prüfen,
- einen Generator (104), der derart eingerichtet ist, eine Ungültigkeitsinformation für das Zertifikat, wenn der Risikowert vom Referenzwert signifikant abweicht, zu generieren
und
- eine Ausgabeeinheit (105), die derart eingerichtet ist, die Ungültigkeitsinformation zum Sperren oder Widerrufen des Zertifikats auszugeben, wobei die gerätespezifischen Daten mindestens eine der folgenden Informationen umfassen:
- eine auf dem Gerät installierte Firmware-Version,
- eine Zeitinformation einer auf dem Gerät installierten Software,
- eine überwachte Kommunikation des Geräts,
- eine überwachte Kommunikation baugleicher Geräte,
- eine überwachte Kommunikation von Geräten in einer definierten räumlichen Umgebung des Geräts,
- eine Aktivitätsinformation des Geräts,
- eine Information über die Nutzungsdauer und/oder die Zahl der Anwendungsfälle des vom Gerät genutzten Zertifikats,
- eine weitere Ungültigkeitsinformation zu einem Zertifikat eines baugleichen Geräts
und/oder
- eine weitere Ungültigkeitsinformation zu einem Zertifikat eines weiteren Geräts in einer definierten räumlichen Umgebung des Geräts.

10. Vorrichtung (100) nach Anspruch 9, die derart eingerichtet ist, zusätzlich zu prüfen, ob das Gerät mindestens ein Ersatzzertifikat umfasst.

11. System (200) zum Sperren oder Widerrufen eines Zertifikats eines Geräts umfassend eine Vorrichtung nach Anspruch 9 oder 10 und eine Zertifizierungsstelle, wobei die Zertifizierungsstelle derart eingerichtet ist, ein Zertifikat für ein Gerät auszustellen, zu sperren und/oder zu widerrufen.

12. Computerprogrammprodukt umfassend Programmcodeteile, die bei der Ausführung des Programms durch einen Prozessor diesen veranlassen, die Schritte des Verfahrens nach einem der Ansprüche 1 bis 8 auszuführen.

## Claims

1. Computer-implemented method for freezing or revoking a certificate of a device, the certificate being suitable for authenticating the device, and the certificate having been generated for the device, having the method step of:
- capturing (S1) device-specific data for the device,
and **characterized by** the method steps of:
- ascertaining (S2) a risk value on the basis of the device-specific data,
- checking (S3) the risk value using a reference value,
- generating (S4a) invalidity information for the certificate if the risk value significantly deviates from the reference value, and
- outputting (S5) the invalidity information to freeze or revoke the certificate, the device-specific data comprising at least one of the following pieces of information:
- a firmware version installed on the device,
- time information relating to software installed on the device,
- a monitored communication of the device,
- a monitored communication of identical devices,
- a monitored communication by devices in defined spatial surroundings of the device,
- activity information relating to the device,
- information about the period of use and/or the number of instances of application of the certificate used by the device,
- further invalidity information pertaining to a certificate of an identical device
and/or
- further invalidity information pertaining to a certificate of another device in defined spatial surroundings of the device.

2. Computer-implemented method according to Claim 1, wherein the certificate is associated with the device-specific data.

3. Computer-implemented method according to either of the preceding claims, wherein the certificate is identified as frozen or revoked on the basis of the invalidity information.

4. Computer-implemented method according to one of the preceding claims, wherein the device certificate is included in a certificate blacklist.

5. Computer-implemented method according to one of the preceding claims, wherein it is additionally checked whether the device comprises at least one replacement certificate.

6. Computer-implemented method according to one of the preceding claims, wherein the certificate identified as frozen or revoked is used to request a replacement certificate.

7. Computer-implemented method according to one of the preceding claims, wherein the device comprises a multiplicity of replacement certificates and freezing or revocation of the certificate or of one of these replacement certificates results in another of these replacement certificates being used to authenticate the device.

8. Computer-implemented method according to one of the preceding claims, wherein, if the certificate is identified as frozen or revoked, additionally at least one other of the replacement certificates is identified as frozen or revoked.

9. Apparatus (100) for freezing or revoking a certificate of a device, the certificate being suitable for authenticating the device, and the certificate having been generated for the device, comprising:
- an input unit (101) configured to capture device-specific data for the device,
and **characterized by**
- an analysis unit (102) configured to ascertain a risk value on the basis of the device-specific data,
- a checking unit (103) configured to check the risk value using a reference value,
- a generator (104) configured to generate invalidity information for the certificate if the risk value significantly deviates from the reference value, and
- an output unit (105) configured in such a way as to output the invalidity information to freeze or revoke the certificate, the device-specific data comprising at least one of the following pieces of information:
- a firmware version installed on the device,
- time information relating to software installed on the device,
- a monitored communication of the device,
- a monitored communication of identical devices,
- a monitored communication by devices in defined spatial surroundings of the device,
- activity information relating to the device,
- information about the period of use and/or the number of instances of application of the certificate used by the device,
- further invalidity information pertaining to a certificate of an identical device
and/or
- further invalidity information pertaining to a certificate of another device in defined spatial surroundings of the device.

10. Apparatus (100) according to Claim 9, configured in such a way as to additionally check whether the device comprises at least one replacement certificate.

11. System (200) for freezing or revoking a certificate of a device, comprising an apparatus according to Claim 9 or 10 and a certificate authority, the certificate authority being configured in such a way as to issue, freeze and/or revoke a certificate for a device.

12. Computer program product comprising program code portions that, when the program is executed by a processor, cause said processor to perform the steps of the method according to one of Claims 1 to 8.

## Revendications

1. Procédé mis en oeuvre par ordinateur de blocage ou d'annulation d'un certificat d'un appareil, dans lequel le certificat est propre à authentifier l'appareil et dans lequel on a créé le certificat pour l'appareil, comprenant le stade de procédé :
- saisie (S1) de données spécifiques à un appareil pour l'appareil, et **caractérisé par** les stades de procédé :
- détermination (S2) d'une valeur de danger en fonction des données spécifiques à un appareil,
- contrôle (S3) de la valeur de danger à l'aide d'une valeur de référence,
- création (S4a) d'une information d'invalidité du certificat, si la valeur de danger s'écarte significativement de la valeur de référence, et
- émission (S5) de l'information d'invalidité pour bloquer ou annuler le certificat, dans lequel les données spécifiques à un appareil comprennent au moins l'une des informations suivantes :
- une version firmware installée sur l'appareil,
- une information temporelle d'un logiciel installé sur l'appareil,
- une communication contrôlée de l'appareil,
- une communication contrôlée d'appareils de même construction,
- une communication contrôlée d'appareils dans un environnement spatial défini de l'appareil,
- une information d'activité de l'appareil,
- une information sur la durée d'utilisation et/ou le nombre de cas d'application du certificat utilisé par l'appareil,
- une autre information d'invalidité d'un certificat d'un appareil de même construction, et/ou
- une autre information d'invalidité d'un certificat d'un autre appareil dans un autre environnement spatial défini de l'appareil.

2. Procédé mis en oeuvre par ordinateur suivant la revendication 1, dans lequel le certificat est associé aux données spécifiques à un appareil.

3. Procédé mis en oeuvre par ordinateur suivant l'une des revendications précédentes, dans lequel on caractérise le certificat comme bloqué ou annulé en fonction de l'information d'invalidité.

4. Procédé mis en oeuvre par ordinateur suivant l'une des revendications précédentes, dans lequel on enregistre le certificat d'appareil dans une liste de blocage de certificats.

5. Procédé mis en oeuvre par ordinateur suivant l'une des revendications précédentes, dans lequel on contrôle en outre si l'appareil comprend au moins un certificat de remplacement.

6. Procédé mis en oeuvre par ordinateur suivant l'une des revendications précédentes, dans lequel on utilise le certificat caractérisé comme bloqué ou annulé pour la demande d'un certificat de remplacement.

7. Procédé mis en oeuvre par ordinateur suivant l'une des revendications précédentes, dans lequel l'appareil comprend une pluralité de certificats de remplacement et, lors du blocage ou de l'annulation du certificat ou de l'un de ces certificats, on utilise un autre de ces certificats pour l'authentification de l'appareil.

8. Procédé mis en oeuvre par ordinateur suivant l'une des revendications précédentes, dans lequel, si on caractérise le certificat comme bloqué ou annulé, on caractérise en outre au moins un autre des certificats de remplacement comme bloqué ou annulé.

9. Dispositif (100) de blocage ou d'annulation d'un certificat d'un appareil, le certificat étant propre à authentifier l'appareil et le certificat ayant été créé pour l'appareil, comprenant :
- une unité (101) d'entrée, qui est agencée pour saisir des données spécifiques à un appareil pour l'appareil, et **caractérisé par**
- une unité (102) d'analyse, qui est agencée pour déterminer une valeur de danger en fonction des données spécifiques à un appareil,
- une unité (103) de contrôle, qui est agencée pour contrôler la valeur de danger à l'aide d'une valeur de référence,
- un créateur (104), qui est agencé pour créer une information d'invalidité du certificat, si la valeur de danger s'écarte significativement de la valeur de référence,
et
- une unité (105) de sortie, qui est agencée pour émettre l'information d'invalidité pour bloquer ou annuler le certificat, dans lequel les données spécifiques à un appareil comprennent au moins l'une des informations suivantes :
- une version firmware installée sur l'appareil,
- une information temporelle d'un logiciel installé sur l'appareil,
- une communication contrôlée de l'appareil,
- une communication contrôlée d'appareils de même construction,
- une communication contrôlée d'appareils dans un environnement spatial défini de l'appareil,
- une information d'activité de l'appareil,
- une information sur la durée d'utilisation et/ou le nombre de cas d'application du certificat utilisé par l'appareil,
- une autre information d'invalidité d'un certificat d'un appareil de même construction, et/ou
- une autre information d'invalidité d'un certificat d'un autre appareil dans un autre environnement spatial défini de l'appareil.

10. Dispositif (100) suivant la revendication 9, qui est agencé pour contrôler en outre si l'appareil comprend au moins un certificat de remplacement.

11. Système (200) de blocage ou d'annulation d'un certificat d'un appareil, comprenant un dispositif suivant la revendication 9 ou 10 et un poste de certification, dans lequel le poste de certification est agencé pour bloquer et/ou annuler l'établissement d'un certificat pour un appareil.

12. Produit de programme d'ordinateur comprenant des parties de code de programme qui, lors de la réalisation du programme par un processeur, font que celles-ci effectuent les stades du procédé suivant l'une des revendications 1 à 8.
